# EUROPÄISCHE PATENTANMELDUNG

(11) **EP 2 671 663 A2**
(43) Veröffentlichungstag der Anmeldung: **11.12.2013**
(21) Anmeldenummer: 13001733.8
(22) Anmeldetag: 04.04.2013
(51) Int. Cl.: B23K 11/24

(54) **Verfahren zum Betrieb einer Widerstandsschweißvorrichtung unter Verwendung eines Netzfilters; entsprechende Vorrichtung**

(30) Priorität: 06.06.2012 DE 102012011246
(71) Anmelder: ROBERT BOSCH GMBH, 70442 Stuttgart (DE)
(72) Erfinder: Scholz, Reinhard, 64711 Erbach (DE); Punzet, Alfred, 64711 Erbach (DE)
(74) Vertreter: Thürer, Andreas

(57) **Zusammenfassung**

Die Erfindung nutzt ein aktives Filter (15), welches an den Phasen (L1 - L3)eines 3-phasigen Netzes parallel zur Widerstandsschweißvorrichtung angeschlossen ist, um den Eingangsstrom des Schweißumrichters (14) der Sinusform anzunähern.

## Beschreibung

Die Erfindung befasst sich mich einem Verfahren zum Betrieb einer Widerstandsschweißvorrichtung. Die Widerstandsschweißvorrichtung umfasst einen Schweißumrichter, welcher an ein mehrphasiges Netz anschließbar ist und welcher eine Gleichrichtung des Netzwechselstromes durchführt. Aus dem gleichgerichteten Netzwechselstrom wird mittels Leistungshalbleitern wiederum ein zweiphasiger pulsbreitenmodulierten Wechselstrom erzeugt, welcher der Primärseite eines Schweißtransformators zuführbar ist.

Die Offenlegungsschrift DE 41 34 461 A1 zeigt ein Verfahren zur Vermeidung übergroßer Ströme in einem Schweißumrichter, der aus einem gleichgerichteten Netzwechselstrom mittels Leistungshalbleitern einen zweiphasigen pulsbreitenmodulierten Wechselstrom erzeugt, welcher der Primärseite eines Schweißtransformators zugeführt wird.

Das Verfahren weist folgende Verfahrensschritte auf: Der Strom wenigstens einer Phase des Primärkreises wird mittels eines Messfühlers erfasst, zu jedem erfassten Stromsignal wird durch Differentiation nach der Zeit die Zeitableitung gebildet, das zeitabgeleitete Messsignal wird mit einem vorgegebenen Maximalwert verglichen. Übersteigt das zeitabgebildete Messsignal den vorgegebenen Maximalwert, wird ein zur Abschaltung der Leistungshalbleiter führendes Signal abgegeben.

Die hier gezeigte Anordnung umfasst eine sogenannte B6-Eingangsbrücke, welche unmittelbar an ein mehrphasiges Netz angeschlossen ist. Derartige Eingangsbrücken verursachen sehr hohe Stromoberwellen im Netz. Vor allem die 5. Oberwelle kann bei bis zu 80% liegen und selbst bei Vorschaltung einer Netzdrossel ist mit einer Absenkung auf maximal 40 % zu rechnen.

Die Aufgabe der Erfindung besteht darin, eine Vorrichtung und ein Verfahren bereitzustellen, so dass die oben erwähnten nachteiligen Effekte möglichst vermieden oder vermindert werden.

Zu diesem Zwecke nutzt die Erfindung eine eingangs erwähnte Vorrichtung, wobei diese Vorrichtung derart realisiert ist, dass der Netzwechselstrom mittels eines vorzugsweise aktiven Netzfilters sinusförmig einstellbar ist und zwar bevor aus dem Netzwechselstrom mittels der Leistungshalbleiter der zweiphasige pulsbreitenmodulierte Wechselstrom für einen anschließbaren Schweißtransformator erzeugt wird.

Auf Grund der reduzierten Stromoberwellen sinkt nun der Netzphaseneffektivstrom und damit auch die Verluste in der Netzzuleitung. Die geringeren höherfrequenten Netzstromanteile erzeugen weniger Verluste in der Netzeinspeisung.

Vorzugsweise misst das Netzfilter mittels einer Messvorrichtung für die Netzspannung und/oder den Netzstrom die Netzspannung und/oder den Netzstrom selbsttätig.

Spannung und Strom werden zweiphasig gemessen. Optional kann auch die dritte Phase gemessen werden, um den Mittelpunkt des Netzes zu regeln.

Weiter ermittelt das Netzfilter Abweichungen des Netzstromes von der Form eines im wesentlichen sinusförmigen Stromes selbsttätig.

Das aktive Netzfilter speist weiter vorzugsweise mittels einer Einspeiseanordnung Netzstrom selbsttätig ein und speist bei Bedarf mittels einer Rückspeiseanordnung Strom in das Netz auch wieder selbsttätig zurück.

Durch diese Maßnahmen wird es möglich die Eingangs erwähnten Oberwellen zu reduzieren und mit annähernd sinusförmigen Verläufen zu arbeiten.

Vom Schutzumfang ebenfalls umfasst ist eine Widerstandsschweißvorrichtung mit allen zur Realisierung des erfindungsgemäßen Verfahrens erforderlichen Komponenten.

Hierzu gehört neben einem vorzugsweise aktiven Filter, welches an den Phasen des mehrphasigen Netzes parallel zur Widerstandsschweißvorrichtung angeschlossen und vorzugsweise von der Netzanschlussvorrichtung umfasst ist.

Weiter umfasst das vorzugsweise aktive Netzfilter eine Messvorrichtung für die Netzspannung und/oder den Netzstrom, sowie eine Anordnung zur Ermittlung von Abweichungen des Netzstromes von der der Form eines sinusförmigen Stromes und eine Anordnung zur Einspeisung von Strom aus dem Netz in das Netzfilter.

Das vorzugsweise aktive Netzfilter ermittelt Abweichungen des Netzstromes von der Form eines sinusförmigen Stromes bevorzugt selbsttätig. Das aktive Netzfilter ist hierzu mit einer auf die im Widerstandsschweißumrichters vorhandene Brückenschaltung angepassten Regelstrategie ausgerüstet. Somit können sinusförmige Verläufe optimal verarbeitet werden.

Das aktive Netzfilter speist mittels einer Einspeiseanordnung den Netzstrom in das Netzfilter selbsttätig ein.

Während der Einspeisephase des aktiven Filters benötigt der angeschlossene Widerstandsschweißumrichter weniger augenblicklichen Strom. Der zur Realisierung der erwarteten Sinusform des Netzstromes erforderliche Strom kann somit vom aktiven Netzfilter aufgenommen und zwischengespeichert und zu gegebener Zeit Rückgespeist werden.

Benötigt der Widerstandsschweißumrichter einen höheren Strom als das Netz liefern kann, so speist das aktive Filter den erforderlichen Strom ins Netz zurück, um insgesamt die erwartete Sinusform des Netzphasenstromes nachzubilden.

Zur Realisierung des oben genannten Verfahrens wird eine Widerstandschweißvorrichtung mit einer Netzanschlußvorrichtung zum Anschluss an ein mehrphasiges Netz vorgeschlagen. Diese umfasst ebenfalls eine Gleichrichtereinheit zur Gleichrichtung des Netzwechselstromes und einen Gleichspannungszwischenkreis zur Weiterleitung des gleichgerichteten Netzwechselstromes an einen aus Leistungshalbleitern aufgebauten Wechselrichter. Die Anorndnung ist derart realisiert, dass der Wechselrichter der Primärseite eines Schweißtransformators einen pulsweitenmodulierten Wechselstrom zuführen kann. Erfindungsgemäß ist ein aktives Filter umfasst ist, welches an den Phasen des mehrphasigen Netzes parallel zur Widerstandsschweißvorrichtung angeschlossen und vorzugsweise von der Netzanschlussvorrichtung umfasst ist.

Während des Betriebs können Stromoberwellen somit reduziert werden, wodurch der Netzphaseneffektivstrom und damit auch die Verluste in der Netzzuleitung abnehmen. Die geringeren höherfrequenten Netzstromanteile erzeugen weniger Verluste in der Netzeinspeisung.

Vorzugsweise ist eine eine Messvorrichtung für die Netzspannung und/oder den Netzstrom umfasst. Die Messung der Netzspannung dient zur phasengleichen Stromsollwertvorgabe für das aktive Netzfilter. Die Messvorrichtung ist derart realisiert, dass Spannung und Strom werden zweiphasig gemessen. Optional kann die Messvorrichtung auch derart realisiert sein, dass eine dritte Phase bei der Messung berücksichtigt werden kann, um den Mittelpunkt des Netzes zu regeln.

Das vorzugsweise aktive Netzfilter umfasst eine Anordnung zur Ermittlung von Abweichungen des Netzstromes von der der Form eines sinusförmigen Stromes.

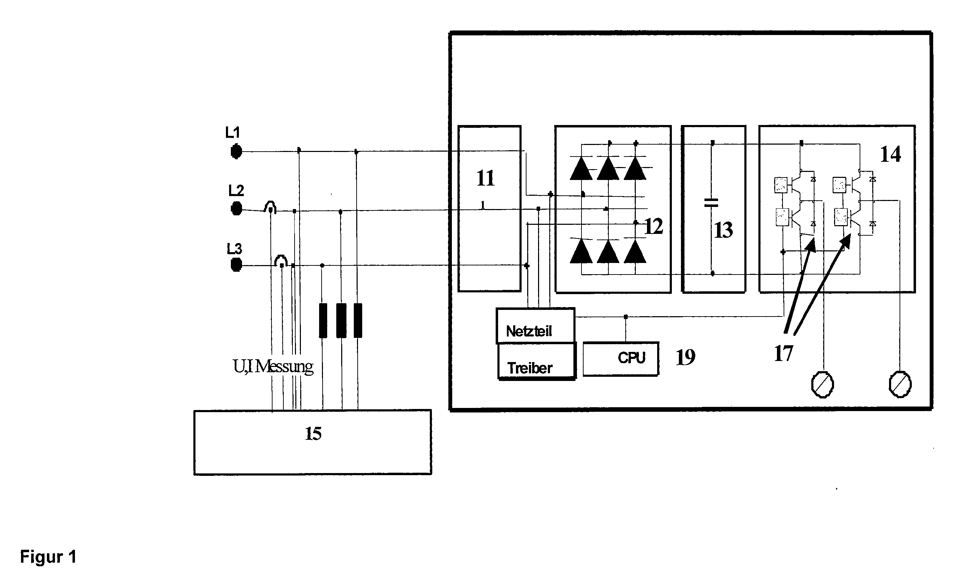

Figur 1 zeigt das Prinzipschaltbild einer Widerstandsschweißanlage 16, wie sie der Erfindung zugrunde liegt. Hauptbestandteile der Anlage 16 sind ein Netzanschluss 11, ein halbgesteuerter (B6) Brückengleichrichter 12, ein Gleichspannungszwischenkreis 13, ein IGBT-Wechselrichter 14 und ein aktives Filter 15.

Üblicherweise ist auch noch eine Steuereinrichtung (nicht gezeigt) vorgesehen, welche die Steuerung der Widerstandsschweißanlage übernimmt.

Die Anlage 16 arbeitet nach folgendem Funktionsprinzip: Ein dreiphasiger 50/60 Hz-Netzwechselstrom L1-L3 wird mittels des Netzanschlusses 11 dem B6 Brückengleichrichter 12 zugeführt. Die am Ausgang des Brückengleichrichters 12 anliegende Spannung wird dem Gleichspannungszwischenkreis 13 zugeführt. Der Gleichspannungszwischenkreis 13 wiederum liefert die Eingangsspannung für den IGBT-Wechselrichter 14. Am Ausgang des IGBT-Wechselrichters 14 kann ein Schweißtransformator (nicht gezeigt) primärseitig angeschlossen werden, welcher vom IGBT-Wechselrichter 14 mit einem pulsweitenmodulierten Wechselstrome gespeist wird.

Hauptbestandteile des IGBT-Wechselrichters 14 sind 4 in H-Brückenschaltung angeordnete Leistungshalbleiter 17, welche entsprechend der gewünschten Frequenz wechselweise mittels einer Regeleinheit 19 ansteuerbar sind. Im IGBT-Wechselrichter 14 entsteht aus dem Zwischenkreisgleichstrom somit ein pulsweitenmodulierter Wechselstrom.

Die Widerstandsschweißanlage 16 ist mittels des Netzanschlusses 11 an das dreiphasige Stromnetz L1-L3 angeschlossen. Erfindungsgemäß ist parallel dazu das aktive Filter 15 ebenfalls an das dreiphasige Stromnetz L1-L3 angeschlossen.

Der Anschluss des Filters 15 and die drei Phasen L1 - L3 erfolgt mittels Netzdrosseln. Mittels einer Strom- und Spannungsmessung in den drei Netzphasen wird im aktiven Filter der jeweils von der Sinusform abweichende Strom ermittelt und am Netzanschluss 11 der Widerstandsschweißanlage vom erfindungsgemäßen aktiven Netzfilter eingespeist oder rückgespeist und zwar derart, dass am Netzanschluss 11 ein im wesentlichen sinusförmiger Strom für die Widerstandsschweißanlage bereitgestellt wird.

Das aktive Filter 15 bewirkt somit die Bereitstellung eines Kompensationsstromes, wodurch sich die Netzverluste aufgrund der nicht mehr vorhandenen Stromoberwellen gravierend verringern. Ein Leistungsfaktor um 1 kann erreicht werden, wobei der Leistungsfaktor das Verhältnis des Betrages von der Wirkleistung zur Scheinleistung repräsentiert. Das Filter 15 führt auch eine U/I-Messung bezüglich der Phasen L1 - L3 durch.

Das Bezugszeichen 18 kennzeichnet weitere Komponenten, wie Netzteile, Treiber, etc.

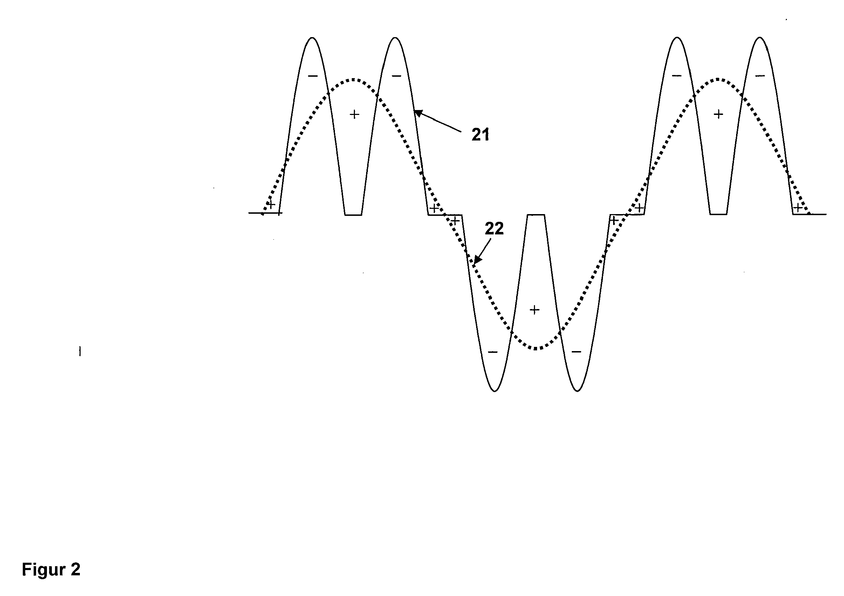

Figur 2 zeigt grob schematisch die Arbeitsweise der Erfindung. Der eingangsseitige B6 Brückengleichrichter erzeugt im Netz Oberwellen 21 und von der Sinusform 22 relative stark abweichende Verläufe. Diese Oberwellen 21 repräsentieren ohne vorkehrende Maßnahmen den Strom der Widerstandsschweißanlage. Das aktive Filter 15 mit erfindungsgemäßer Einspeisefunktion und Rückspeisefunktion stellt die mit dem Pluszeichen und dem Minuszeichen gekennzeichneten Flächen als Kompensationsströme zur für den Betriebs des Schweißumrichters zur Verfügung. Die mit einem Pluszeichen gekennzeichneten Bereiche werden mittels von dem aktiven Filter 15 bereitgestellten Eingangsströme (+) kompensiert. Die mit einem Minuszeichen gekennzeichneten Bereiche werden mittels von dem aktiven Filter 15 bereitgestellten Rückgangströmen kompensiert. Dadurch wird der sonst stark verzerrte Eingangsstrom der Widerstandsschweißanlage geglättet und einem idealen sinusförmigen Verlauf stark angenähert. Die daraus resultierenden Vorteile bezüglich der verminderten Oberwelligkeit wurden weiter Oben bereits erläutert.

Das erfindungsgemäße Verfahren und die erfindungsgemäße Vorrichtung ist prinzipiell in allen Anwendungen denkbar, welche Nachteile aufgrund vorhandener Oberwellen zur Folge haben, insbesondere verursacht durch von der Vorrichtung umfassten große Induktivitäten.

## Patentansprüche

1. Verfahren zum Betrieb einer Widerstandsschweißvorrichtung mit Schweißumrichter, welcher an ein mehrphasiges Netz (L1, L2, L3) anschließbar ist, welcher eine Gleichrichtung (12) des Netzwechselstromes durchführt und welcher aus dem gleichgerichteten Netzwechselstrom mittels Leistungshalbleitern (14) einen zweiphasigen pulsbreitenmodulierten Wechselstrom erzeugt, welcher der Primärseite eines Schweißtransformators zugeführt werden kann,
**dadurch gekennzeichnet, dass**
der Netzwechselstrom mittels eines vorzugsweise aktiven Netzfilters (15) sinusförmig eingestellt wird, bevor aus dem Netzwechselstrom mittels der Leistungshalbleiter (14) der zweiphasige pulsbreitenmodulierte Wechselstrom für den Schweißtransformator erzeugt wird.

2. Verfahren gemäß Anspruch 1, wobei das Netzfilter (15) mittels einer Messvorrichtung für die Netzspannung und/oder den Netzstrom die Netzspannung und/oder den Netzstrom selbsttätig mindestens unter Verwendung zweier Phasen misst.

3. Verfahren gemäß einem der vorhergehenden Ansprüche, wobei das Netzfilter (15) Abweichungen des Netzstromes von der Form eines sinusförmigen Stromes selbsttätig ermittelt.

4. Verfahren gemäß einem der vorhergehenden Ansprüche, wobei das Netzfilter (15) mittels einer Einspeiseanordnung Netzstrom in das Netzfilter selbsttätig einspeist.

5. Verfahren gemäß einem der vorhergehenden Ansprüche, wobei das Netzfilter (15) mittels einer Rückspeiseanordnung Strom in das Netz selbsttätig zurückspeist.

6. Widerstandschweißvorrichtung mit einer Netzanschlußvorrichtung zum Anschluss an ein mehrphasiges Netz und mit einer Gleichrichtereinheit zur Gleichrichtung des Netzwechselstromes und mit einem Gleichspannungszwischenkreis zur Weiterleitung des gleichgerichteten Netzwechselstromes an einen aus Leistungshalbleitern aufgebauten Wechselrichter, so dass dieser der Primärseite eines Schweißtransformators einen pulsweitenmodulierten Wechselstrom zugeführt werden kann,
**dadurch gekennzeichnet, dass**
ein vorzugsweise aktives Filter umfasst ist, welches an den Phasen des mehrphasigen Netzes parallel zur Widerstandsschweißvorrichtung angeschlossen und vorzugsweise von der Netzanschlussvorrichtung umfasst ist.

7. Widerstandsschweißvorrichtung gemäß Anspruch 6, wobei das vorzugsweise aktive Netzfilter eine Messvorrichtung für die Netzspannung und/oder den Netzstrom unter Verwendung mindestens zweier Phasen umfasst.

8. Widerstandsschweißvorrichtung gemäß einem der vorhergehenden Ansprüche 6 oder 7, wobei das vorzugsweise aktive Netzfilter eine Anordnung zur Ermittlung von Abweichungen des Netzstromes von der der Form eines sinusförmigen Stromes umfasst.

9. Widerstandsschweißvorrichtung gemäß einem der vorhergehenden Ansprüche 6 bis 8, wobei das aktive Netzfilter eine Anordnung zur Einspeisung von Strom aus dem Netz in das Netzfilter umfasst.

10. Widerstandsschweißvorrichtung gemäß einem der vorhergehenden Ansprüche 6 bis 9, wobei das aktive Netzfilter eine Anordnung zur Rückspeisung von Strom aus dem Netzfilter in das Netz umfasst.
